Europäisches Patentamt

European Patent Office

Office européen des brevets

(19)

(11) Publication number: **0 217 785 B1**

## EUROPEAN PATENT SPECIFICATION

(12)

(45) Date of publication of patent specification: **17.07.91**   (51) Int. Cl.⁵: **G11B 23/03**, G11B 23/50

(21) Application number: **86890264.4**

(22) Date of filing: **23.09.86**

(54) **Magnetic disk cassette having internal biasing ribs.**

(30) Priority: **27.09.85 US 781060**

(43) Date of publication of application:
**08.04.87 Bulletin 87/15**

(45) Publication of the grant of the patent:
**17.07.91 Bulletin 91/29**

(84) Designated Contracting States:
**AT DE FR GB IT NL**

(56) References cited:
**GB-A- 2 016 415**
**GB-A- 2 097 988**
**GB-A- 2 161 314**
**US-A- 4 510 546**

(73) Proprietor: **POLAROID CORPORATION**
**549 Technology Square**
**Cambridge Massachusetts 02139(US)**

(72) Inventor: **Downey, Rogers B.**
**6 Berwick Road**
**Lexington Massachusetts 02173(US)**

(74) Representative: **Holzer, Walter, Dipl.-Ing. et al**
**Patentanwälte, Dipl.-Ing. Dr. techn. Schütz**
**Alfred, Dipl.-Ing. Holzer Walter, Dipl.-Ing.**
**Pfeifer Otto, Fleischmanngasse 9**
**A-1040 Wien(AT)**

## Description

BACKGROUND OF THE INVENTION

The present invention relates to a cassette formed of a relatively hard material suitable for enclosing a flexible magnetic disk that is rotatable within said cassette, in general, and to simplified means for enhancing the cleaning of, and for stabilizing the motion of, said flexible disk as it is rotated within said cassette, in particular.

Flexible or floppy magnetic disks are widely used as recording media for computers because of their ease of handling and their relatively low cost. A floppy disk is a flexible disk of polyester resin that is coated on one or both sides with magnetic materials on which digital information can be sorted or from which such information can be retrieved by a magnetic head as a portion of the flexible disk is rotated past the magnetic head at a relatively high rate of speed in contact therewith or in relatively close proximity thereto.

Floppy disks are usually contained in a flexible jacket formed with a generally rectangular opening that serves as a magnetic head access window and with a center opening for engagement of the disk with a disk drive. In such an arrangement, it is possible for dust or foreign matter to enter the flexible jacket through these openings and to be deposited on the recording medium. On recording media disks with a high information density, dust or foreign matter may cause a brief separation of the magnetic head from the recording media and an attendant loss of data from said recording media, a phenomenon that is also referred to as dropout. Also, there is currently a trend toward making a recording media smaller in size (i.e., 3 1/2 inch diameter disks as opposed to 5 1/4 and 8 inch diameter disks currently in widespread use). These smaller disks (sometimes referred to as microdisks) have the advantage that they are very easily transported, even in a shirt or coat pocket. However, this advantage may well lead to increased exposure to dropout producing contaminants.

There are existing designs that provide a measure of contaminant protection to these smaller diameter micro-disks. In general, these designs provide a case or enclosure which is more rigid or durable than the traditional floppy disk jacket. In addition, a shutter is provided to keep dust and foreign matter from entering the case through the magnetic head access window. Like the soft jacketed floppy disks, these newer hard jacketed micro-disks usually include wiping fabrics or cleaning sheets often made of non-woven material that are adhered to the inside of both halves of the jacket or cartridge to wipe any debris from the floppy disk as it is rotated by the disk drive. These sheets also prevent abrading or wearing of the floppy disk by inside surfaces of the hard floppy disk enclosure.

In one previous design, described in U.S. Patent No. 4,510,546 to ASAMI ET AL, a flexible spring-force member or lifter is provided on an inside surface of the hard disk-enclosing case that presses a portion of a cleaning sheet against a surface of the floppy disk to thereby enhance the cleaning action of each of said cleaning sheets. The spring-force member is adhesively attached to said inside surface and a radially extending rib molded on the same inside surface cooperates with said spring-force member to provide the required cleaning-action-enhancing spring-force. Disadvantages associated with a spring-force providing member of this type include the provision of the spring-force member as an additional piece-part for the magnetic disk cassette, the difficulty of fabricating such spring members of a consistently identical spring force level when installed in each cassette, and the change in the force of such springs that occurs naturally as a result of aging.

It is a primary object of the present invention, therefore, to provide spring-force means for enhancing the cleaning function of a liner located within a magnetic disk cassette that will require no additional cassette piece-parts.

It is another object of the present invention to provide a spring-force means for enhancing the cleaning function of a disk-cleaning liner included within a magnetic disk cassette that will readily and consistently provide the desired spring-force level at the time that a magnetic disk cassette is being manufactured.

It is another object of the present invention to provide spring-force means for enhancing the cleaning function of a disk cleaning liner included within a magnetic disk cassette that will provide a consistent spring force level over an extended period of time.

It is yet another object of the present invention to provide spring-force means for a magnetic disk cassette that will stabilize magnetic disk movement lateral to the direction of disk rotation in the region where the magnetic head and the rotating disk magnetically interact with one another.

It is a further object of the present invention to provide spring-force means for a magnetic disk cassette that is capable of laterally positioning the magnetic disk to a predetermined location in the region near the magnetic head, while the magnetic disk is being rotated.

SUMMARY OF THE INVENTION

In accordance with the present invention, an improved magnetic disk cassette is provided for enhancing the disk cleaning function of a cassette liner, for laterally positioning the magnetic disk to a predetermined location in the region where the magnetic disk is magnetically coupled to the magnetic head and for stabilizing magnetic disk movement lateral to the direction of disk rotation. The magnetic disk cassette includes a flexible magnetic disk having a magnetic coating on at least one side thereof and a liner adjacent the coated disk side sandwiched between a pair of relatively hard disk-enclosing covers. A set of tapered generally radially extending ribs are formed on the major inside surface of each of said covers in a generally opposed relation. When the magnetic disk cassette is fully assembled such that the magnetic disk and adjacent liner are sandwiched between the cassette covers, the projecting ends of a set of opposed tapered ribs engage and temporarily deform a portion of the disk and the liner adjacent thereto to thereby enhance the liner's cleaning function and to stabilize the lateral movement of, as well as the lateral position of, a portion of the rotating magnetic disk at a location circumferentially spaced a predetermined distance from said tapered rib set.

BRIEF DESCRIPTION OF THE DRAWINGS

Fig. I is an exploded view, in perspective, of a magnetic disk cassette, excluding disk liners, incorporating a preferred embodiment of the present invention.

Fig. 2 is an exploded elevational view of the improved magnetic disk cassette of the present invention taken on the line 2-2 in Fig. I, showing disk components, including disk liners, in closer proximity than that shown in said Fig. I.

Fig. 3 is a perspective view of the magnetic disk cassette of Figs. I and 2 fully assembled having cut-away portions to facilitate the detailed description thereof.

Figs. 4A, 5A and 6A are sectional views taken on the line 4A-4A in Fig. I for different rib-height configurations showing the alternate embodiments of equal rib height, upper cover rib height greater than lower cover rib height, and lower cover rib height greater than upper cover rib height, respectively.

Figs. 4B, 5B and 6B are partial sectional views taken on the line 4B-4B in Fig. 3 for different magnetic head configurations showing magnetic disk and liner positions relative to a magnetic head for the corresponding rib-height configurations shown in Figs. 4A, 5A and 6A, respectively.

Fig. 7 is a sectional view taken on the line 7-7 in drawing Fig. I.

DESCRIPTION OF THE PREFERRED EMBODIMENTS

Figs I, 2 and 3 show a magnetic disk cassette I0 incorporating a preferred embodiment of the present invention. Magnetic disk cassette I0 includes a circular magnetic disk I2 consisting of a thin polymeric film base and a magnetic layer coated uniformly on opposite surfaces of the film base. A circular aperture is formed in the center of the disk I2. A circular center plate I4, having a flange portion I6 at its periphery, projects through the circular opening and is attached, at its flanged periphery, to that portion of the magnetic disk I2 immediately adjacent the aperture by a suitable adhesive applied to both the flange portion of the center plate I4 and the corresponding portion of the magnetic disk I2. The center plate I4 is formed of a thin metallic plate and includes a generally square aperture I8 into which a shaft (not shown) is inserted for the purpose of coupling a drive motor (not shown) to magnetic disk I2. The center plate I4 also includes an aperture 20 for a locating pin (not shown) spaced from the drive shaft aperture I8.

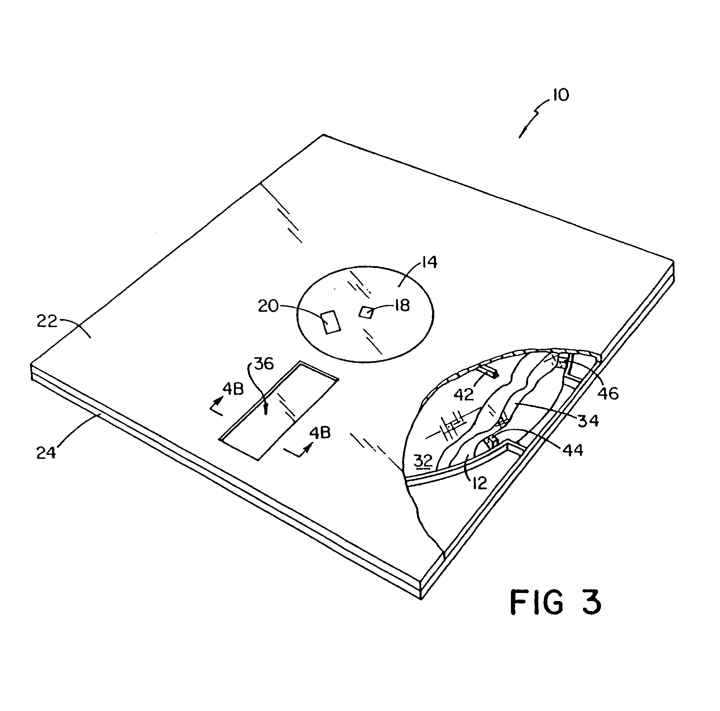

When fully assembled as shown in Fig. 3, the magnetic disk I2 including its center plate 4 is enclosed within a relatively rigid jacket or casing comprising an upper cover 22 and a lower cover 24. The covers 22 and 24 are formed by an injection molding process from an ABS resin and may be snap-fitted or ultrasonically welded together at their outer edges. A circular aperture 26 is formed in the center of the upper cover 22, and the center plate I4, having a somewhat smaller diameter than the aperture 26, sits loosely within the aperture 26. A set of arcuate ribs 28A, 28B. 28C and 28D in the upper cover 22 and a mating set of arcuate ribs 30A, 30B, 30C and 30D in the lower cover 24 limit the lateral movement of the magnetic disk I2 wherever it is rotated between the covers 22 and 24 in the assembled configuration shown in Fig. 3.

A pair of liners 32 and 34 made of a non-woven fabric, such a rayon (regenerated cellulose), is included within the cassette I0 for the removal of dust from the surfaces of the magnetic disk I2 and to prevent dropout, as defined above, and to prevent the coatings on the disk I2 from wearing by the contact with inside surfaces of the covers 22 and 24 whenever disk I2 is rotated. The liner 32, generally circular in shape and of the same diameter as the magnetic disk I2, is bonded to the inner surface of the upper cover 22, and the liner 34, of identical shape as the liner 32, is bonded to the inner surface of the lower cover 24. To facilitate the description of the casette I0, the liners 23 and 34 have been omitted from Fig. I.

In the covers 22 and 24 and in the liners 32 and 34, there are formed radially extending rectangular openings of identical shapes and sizes. When the cassette I0 is assembled, these apertures are in registration with one another. When the magnetic disk cassette l0 is placed in its operative position within a data recording/reproduction system, one or more magnetic heads may be brought into contact with one or both surfaces of the magnetic disk l2 through these rectangular apertures in cover 22 and liner 32 shown at 36 in drawing Fig. 3 and/or cover 24 and liner 34, apertures. For the sake of clarity, these rectangular apertures have not been shown in the drawings. In a data recording/reproduction system where a single magnetic head is employed to contact one surface of the magnetic disk through, for example, the overlapping rectangular apertures formed in the cover 22 and the liner 32, a head pad may also be inserted through the rectangular apertures formed in cover 24 and liner 34 to provide a support against which mechanical forces from another magnetic head at the opposite side of the magnetic disk are reacted.

The magnetic disk cassette l0 is also provided with two sets of integral generally radially extending tapered ribs molded into each of the major inner surfaces 38 and 40 of the upper cover 22 and the lower cover 24, respectively. The tapered ribs serve several important and distinct functions. One function of the ribs is to apply a force to each liner 32 and 34 to enhance their cleaning function as the magnetic disk is rotated within the cassette l0. Another function is to place a backtorque or a drag on the rotating disk l2 in a direction opposite to the force provided by the disk drive motor (not shown) to stabilize movement of the disk in directions lateral to the direction of rotation in the vicinity of the magnetic head or heads. A further function of the ribs is to position the magnetic disk l2 laterally relative to the magnetic head if such positioning is necessary, to further stabilize lateral movement. A magnetic disk cassette may have one or even more more than the two sets of ribs shown in Fig. l, where required. The use of multiple sets of ribs will distribute the force applied to the rotating disk l2 which, among other things, will reduce disk wear at the points where the force is applied.

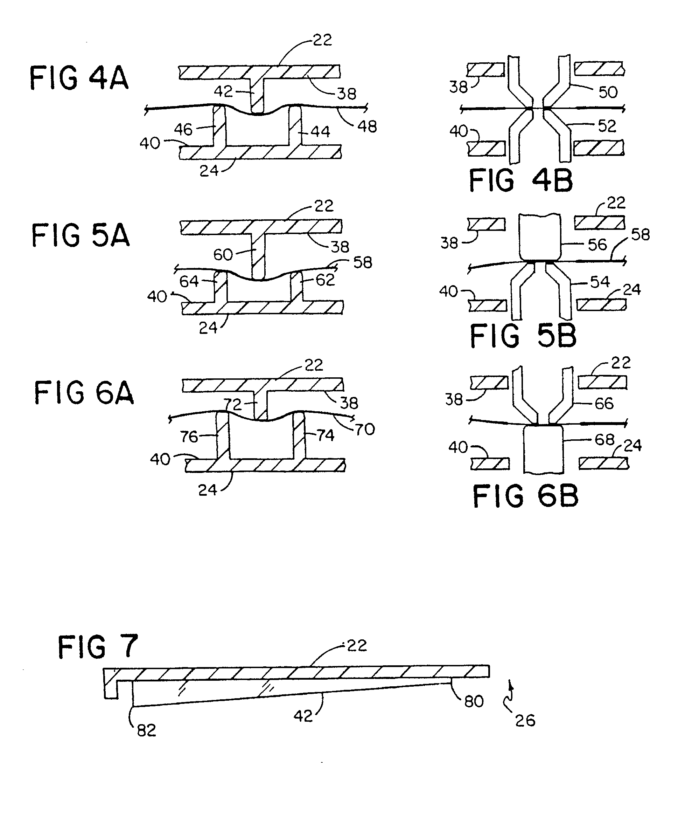

A tapered rib set consists of at least two ribs with at least one rib being located on each of the inner surfaces of the covers 22 and 24 of a cassette l0, the ribs being preferably positioned in a generally opposed relationship with respect to one another when the cassette l0 is fully assembled. The preferred make-up includes three sets of ribs as shown in Fig. l. As noted above, the cassette l0 includes two sets of ribs, and each set comprises the same configuration of three ribs circumferentially placed on cassette covers 22 and 24 at a separation of approximately 120° from one another. One rib set includes a single Tapered rib 42 molded on the surface 38 of the upper cassette cover 22 and two opposed ribs 44 and 46 molded on the surface 40 of the lower cassette cover 24. As shown in Fig. 4A when the disk cassette l0 is fully assembled, the rib 42 on the surface 38 of cover 22 is located approximately midway between the opposite ribs 44 and 46 on the surface 40 of cover 24. The projecting height of each of the ribs 42, 44 and 46 is the same and their vertical dimensions result in a degree of overlap. The term "overlap" generally means that the combined vertical height of ribs 42 and 44, for example, is greater than the spacing between the surfaces 38 and 40 of the covers 22 and 24 when the cassette l0 is assembled. When ribs 42, 44 and 46 are in the relative positions shown in Fig. 4A, the upward or downward projecting ends of the ribs cause a U-shaped bend or wave-like deformation of the layer combination 48 consisting of the magnetic disk l2, and the upper and lower liners 32 and 34. Bending of a magnetic disk may also be achieved where the combined vertical dimension of opposite ribs is less than the dimension the inner surfaces 38 and 40 if the magnetic disk l2 were fabricated from an appropriately thick material. The term "overlap" as used herein is intended to include such an arrangement.

The projecting ends of ribs 42, 44 and 46 and the spring-force inherent in the polyester resin base of the disk l2 against which the rib-ends are reacted for deforming the layer combination 48 combine to urge the liners 32 and 34 into contact with the adjacent surfaces of magnetic disk l2. By urging the liners 32 and 34 into such engagement with disk l2 in this manner, the cleaning of the surfaces of the disk l2 as it is rotated is greatly enhanced. In addition, the drag or resistance to rotation of the disk l2 is thereby increased which substantially reduces movement of disk l2 laterally of the direction of rotation in the region where the disk l2 interacts with one or more magnetic heads. By reducing the extent of lateral movement of the disk l2 during its rotation, improved magnetic coupling between the disk l2 and the magnetic heads 50 and 52 (Fig. 4B), circumferentially spaced from ribs 42, 44 and 46, results and substantially improves the data recording/reproduction process.

In some data recording/reproduction systems, only one side of the magnetic disk is coated with a magnetic medium and therefore only one magnetic head is employed for data recording/reproduction purposes. Such arrangements are shown in Figs. 5A, 5B, 6A and 6B. In the configuration of Fig. 4B in which two magnetic heads are shown, optimum data recording/reproduction is accomplished by magnetic disk l2 entering the space between the magnetic heads 50 and 52 from a plane midway between the surfaces 38 and 40 of the cassette covers 22 and 24. However, in data recording/reproduction systems employing a single magnetic head optimum data recording/reproduction is achieved by the magnetic disk entering the space between the magnetic head and its associated head pad mounted on the opposite side of the disk, from another position than the plane between the covers 22 and 24 as defined above.

In Fig. 5B, for example, where a single magnetic head 54 and opposed head pad 56 are employed on opposite sides of a disk, the combination of magnetic disk 12 and liners 58, similar to the layer combination 48 of Fig. 4A, approaches the area between the magnetic head 54 and the head pad 56 from the side of the cover 24 of the cassette 10. The combination of the magnetic disk and liners 58 is positioned closer to the cover 24 in the area of the magnetic head 54 and head pad 56 by providing a set of three ribs 60, 62, and 64 two of which ribs 62 and 64 are of lesser height than the other rib 60. In Fig. 5A, which shows an alternative embodiment of the present invention, the height of the rib 60 projecting from the surface 38 is approximately twice the height of the pair of ribs 62 and 64 projecting from the opposite surface 40.

Similarly, Fig. 6B discloses an arrangement with a single magnetic head 66 and a head pad 68 on opposite sides of a disk having had a magnetic coating on one side only. The combination of the magnetic disk and liners 70, similar to the combination 48 of Fig. 4A, approaches the area between the magnetic head 66 and the head pad 68 from the side of the cover 22. The combination of the magnetic disk and the liner 70 is positioned closer to the cover 22 in the area of the magnetic head 66 and the head pad 68 by providing a set of ribs 72, 74 and 76, in which the height of the rib 72 is less than the height of the ribs 74 and 76. In Fig. 6a, which shows another embodiment of the invention, the height of the rib 72 projecting from the surface 38 of the cover 22 is approximately one-half the height of a pair of ribs 74 and 76 projecting from the opposite surface 40 of cassette cover 24.

Rib overlap and the distance between the ribs of a rib set have a major effect on the level of drag or backtorque to which the rotating disk 12 is subjected. With other factors remaining the same, the greater the rib overlap and/or the closer the spacing between ribs of a rib set, the greater will be the level of drag on a rotating magnetic disk 12.

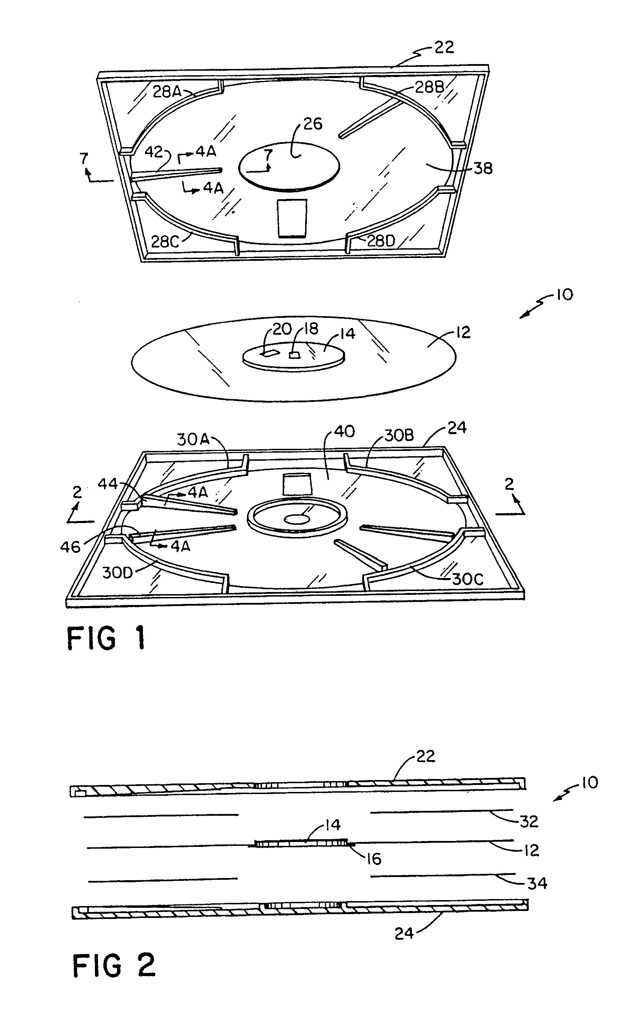

As noted above, all of the ribs projecting from the surfaces 38 and 40 of covers 22 and 24, respectively, are tapered. One such rib is shown in Fig. 7. The height of the radially extending rib 42 changes, at a constant rate from a minimum height at 80 adjacent aperture 26, to a maximum height at 82. While it is not necessary that a rib or a rib set span the entire magnetic disk from center plate 14 (Fig. 2) to its outer peripheral edge to yield the desired level of disk drag and cleaning, it is essential that rib height increase at a fairly constant rate as the radial length of dimension of the rib increases in order to compensate for the change in stiffness of the disk that occurs in disk 14 as a function of distance from its center. The reason for this change in stiffness (best understood by referring to Fig. 2) in that the magnetic disk 12 is supported at its center by the rigid center plate 14 and is unsupported at its periphery. If rib height remained constant or did not change in the radial direction, there may result a non-uniform distribution of the frictional or drag forces on magnetic disk 12 in a radial direction which would result in premature wearing or abrading of the magnetic disk surfaces near the center of the disk and in non-uniform disk cleaning.

## Claims

1. A magnetic disk cassette (10), comprising a casing (22, 24) having inwardly facing surfaces (38, 40); a flexible disk (12) rotatably mounted between said surfaces (38, 40) for recording and retrieving information on at least one side thereof; at least one disk-like liner (32) connected to said casing to preclude its rotation therewithin and superposed over said one disk side, said liner (32) precluding contact between one of said inwardly facing surfaces and said one side of said disk and being formed of a material adapted to clean said one side when urged into contact therewith and said disk rotates within said casing, characterized by at least one elongate protuberance (42; 60; 72) extending from the inwardly facing surface of said casing adjacent said liner (32) to impart a substantially undulating configuration to said disk (12) in a direction substantially radially thereof.

2. The cassette of claim 1 wherein said protuberance is formed by a rib (42; 60; 72) extending radially of said disk (12).

3. The cassette of claim 2, wherein further two ribs (44, 46; 62, 64; 74, 76) extend from another surface of the casing opposite said one surface and positioned on opposite sides of said one rib (42; 60; 72).

4. The cassette of claims 2 - 3 wherein said ribs (42, 44, 46; 60, 62, 64; 72, 74, 76) are tapered to increase in height in a direction radially of said disk (12).

5. The cassette of claims 2 - 4, wherein a plurality of said ribs is respectively circumferentially disposed at different spaced apart locations around said casing.

6. The cassette of claims 2 - 5, wherein said generally radially extending ribs (42, 44, 46; 60, 62, 64; 72, 74, 76) projecting inward from each of said major casing surfaces (38, 40) are in a closely disposed overlapping relationship.

7. The cassette of claims 2 - 6 wherein the heights of each of said inwardly projecting ribs (42, 44, 46) from their respective major surface (38, 40) at the same radial rib dimension is equal.

8. The cassette of claims 2 - 7 wherein the heights of each of said ribs (60; 72) projecting inwardly from one of said major casing surfaces (38) is different from the height of each of said ribs (62, 64; 74, 76) projecting inwardly from the other major casing surface (40) at the same radial rib dimension.

**Revendications**

1. Cassette (10) de disque magnétique, comprenant une enveloppe (22, 24) comportant des surfaces (38, 40) orientées vers l'intérieur; un disque souple (12) monté de façon tournante entre lesdites surfaces (38, 40) pour l'enregistrement d'informations sur au moins une première face de ce disque et pour l'extraction de ces informations; au moins un premier garnissage (32) analogue à un disque, ce garnissage étant relié à ladite enveloppe de manière qu'il ne puisse pas tourner à l'intérieur de cette dernière et étant superposé à ladite première face du disque, ledit garnissage (32) empêchant un contact entre une première desdites surfaces orientée vers l'intérieur et ladite première face du disque et étant formé d'une matière adaptée pour nettoyer ladite première face quand elle est poussée contre cette face et quand le disque précité tourne à l'intérieur de l'enveloppe, **caractérisée** par au moins une première protubérance (42 ; 60 ; 72) de forme allongée s'étendant depuis la surface de ladite enveloppe qui est orientée vers l'intérieur et qui est adjacente au garnissage (32) pour donner au disque (12) une configuration sensiblement sinueuse, sensiblement dans le sens radial de ce disque.

2. Cassette selon la revendication 1, dans laquelle ladite protubérance est formée par une nervure (42 ; 60 ; 72) s'étendant dans le sens radial du disque (12).

3. Cassette selon la revendication 2, dans laquelle deux autres nervures (44, 46 ; 62, 64 ; 74, 76) s'étendent depuis une autre surface de l'enveloppe opposée à ladite première surface et disposées de part et d'autre de ladite première nervure (42 ; 60 ; 72).

4. Cassette selon les revendications 2-3, dans laquelle les nervures (42, 44, 46 ; 60, 62, 64 ; 72, 74, 76) ont une section droite qui varie de manière à augmenter de hauteur dans le sens radial du disque (12).

5. Cassette selon les revendications 2-4, dans laquelle une pluralité desdites nervures sont disposées respectivement dans le sens circonférenciel en différents endroits espacés sur le pourtour de l'enveloppe.

6. Cassette selon les revendications 2-5, dans laquelle les nervures (42, 44, 46 ; 60, 62, 64 ; 72, 74, 76) s'étendant radialement d'une façon générale en faisant saillie vers l'intérieur depuis chacune des surfaces principales (38, 40) de l'enveloppe sont disposées de manière à se chevaucher étroitement.

7. Cassette selon les revendications 2-6, dans laquelle les hauteurs de chacune des nervures (42, 44, 46) faisant saillie vers l'intérieur depuis leur surface principale respective (38, 40) en un point situé à la même dimension radiale de nervures sont égales.

8. Cassette selon les revendications 2-7, dans laquelle les hauteurs de chacune des nervures (60 ; 72) faisant saillie vers l'intérieur depuis une desdites surfaces principales (38) de l'enveloppe sont différentes de la hauteur de chacune des nervures (62, 64 ; 74, 76) faisant saillie vers l'intérieur depuis l'autre surface principale (40) de l'enveloppe en un point situé à la même dimension radiale de nervures.

**Patentansprüche**

1. Magnetplattenkassette (10) mit einem Gehäuse (22, 24) mit nach innen weisenden Hauptflächen (38, 40); einer flexiblen, zwischen diesen Hauptflächen (38, 40) drehbar gelagerten Platte (12) zum Aufzeichnen und Wiedergeben von Informationen auf zumindest einer ihrer Seiten; wenigstens einer scheibenartigen Auskleidung (32), die mit dem Gehäuse verbunden ist, um ihre Drehung innerhalb des Gehäuses zu verhindern, und die diese eine Plattenseite überlagert, wobei die Auskleidung (32) eine Berührung zwischen einer der nach innen weisenden Hauptflächen und der erwähnten einen Plattenseite verhindert und aus einem Material gebildet ist, das zum Reinigen der erwähnten einen Plattenseite befähigt ist, wenn es mit dieser in Berührung gebracht wird und die Platte sich innerhalb des Gehäuses dreht, dadurch gekennzeichnet, daß zumindest eine längliche Erhebung (42; 60; 72) vorgesehen ist, die sich an der nach innen weisenden, der Auskleidung (32) benachbarten Hauptfläche des Gehäuses erstreckt, um der Platte (12) in einer im wesentlichen radialen Richtung eine im wesentlichen wellige Konfiguration zu erteilen.

2. Kassette nach Anspruch 1, dadurch gekennzeichnet, daß die Erhebung durch eine Rippe (42; 60; 72) gebildet ist, die sich bezüglich der Platte (12) radial erstreckt.

3. Kassette nach Anspruch 2, dadurch gekennzeichnet, daß sich zwei weitere Rippen (44, 46; 62, 64; 74, 76) an der anderen, der erwähnten einen Gehäusehauptfläche gegenüberliegenden Gehäusehauptfläche erstrecken und zu beiden Seiten der erwähnten einen Rippe (42; 60; 72) liegen.

4. Kassette nach Anspruch 2 oder 3, dadurch gekennzeichnet, daß die Rippen (42, 44, 46; 60, 62, 64; 72, 74, 76) verjüngt sind, wobei ihre Höhe in radialer Richtung der Platte (12) zunimmt.

5. Kassette nach einem der Ansprüche 2 bis 4, dadurch gekennzeichnet, daß über den Umfang des Gehäuses mehrere Rippen an verschiedenen, im Abstand voneinander liegenden Stellen angeordnet sind.

6. Kassette nach einem der Ansprüche 2 bis 5, dadurch gekennzeichnet, daß die von den Gehäusehauptflächen (38, 40) nach innen vorspringenden und sich im wesentlichen radial erstreckenden Rippen (42, 44, 46; 60, 62, 64; 72, 74, 76) in eng benachbarter Überlappungsbeziehung angeordnet sind.

7. Kassette nach einem der Ansprüche 2 bis 6, dadurch gekennzeichnet, daß die Höhen aller von einer zugeordneten Gehäusehauptfläche (38, 40) nach innen vorspringenden Rippen (42, 44, 46) an der gleichen radialen Rippenstelle gleich sind.

8. Kassette nach einem der Ansprüche 2 bis 7, dadurch gekennzeichnet, daß sich die Höhe aller von einer zugeordneten Gehäusehauptfläche (38) nach innen vorspringenden Rippen (60; 72) von der Höhe aller von der anderen Gehäusehauptfläche (40) nach innen vorspringenden Rippen (62, 64; 74, 76) an der gleichen radialen Rippenstelle unterscheidet.

FIG 1

FIG 2

FIG 3

EP 0 217 785 B1

FIG 4A

22

42 — 38

46 — 44 — 48

40 — 24

FIG 4B

38 — 50

40 — 52

FIG 5A

22

60 — 38

64 — 58

40 — 62 — 24

FIG 5B

38 — 56 — 58

40 — 54 — 24

FIG 6A

22

72 — 38

76 — 74 — 70

40 — 24

FIG 6B

38 — 22

40 — 66 — 68 — 24

FIG 7

22

82 — 42 — 80 — 26